(19) Europäisches Patentamt

European Patent Office

Office européen des brevets

(11) **EP 2 466 791 A1**

(12) **EUROPEAN PATENT APPLICATION**

(43) Date of publication:
**20.06.2012 Bulletin 2012/25**

(21) Application number: **10306454.9**

(22) Date of filing: **17.12.2010**

(51) Int Cl.:
**H04L 12/24** (2006.01)  **H04L 12/26** (2006.01)
**H04L 12/56** (2006.01)  **H04L 29/08** (2006.01)
**H04L 29/06** (2006.01)  **H04L 12/66** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **France Telecom**
**75015 Paris (FR)**

(72) Inventors:
• **Boyle, David**
  **38000 Grenoble (FR)**
• **Ramparany, Fano**
  **38100 Grenoble (FR)**

(74) Representative: **Cabinet Plasseraud**
  **52, rue de la Victoire**
  **75440 Paris Cedex 09 (FR)**

(54) **Data processing for managing the quality of service in a machine-to-machine network**

(57) Method of data processing for managing the end-to-end quality of service in a Machine-to-Machine network comprising a set of devices (11,12,13) in a device domain (10) of the Machine-to-Machine network, a gateway (21) in a network domain (20) of the Machine-to-Machine network, and a service platform (23) in an application domain (30) of the Machine-to-Machine network, each device of the set of devices (11,12,13) being connected to the service platform (23) via the gateway (21), wherein the gateway (21) is mapping the quality of service field data of a message received from a device to at least one quality of service parameter related to a protocol used in the network domain (20) and modifying the message accordingly, and transmitting the modified message to the service platform (23) depending on the mapping.

FIG. 1

**Description**

## TECHNICAL FIELD

The present invention relates to the field of telecommunications, and more specifically to the management of end-to-end quality of service for large scale distributed Machine-to-Machine (M2M) networks.

## BACKGROUND

Machine-to-Machine (M2M) network may be described as a multi-domain networking infrastructure whereby machines communicate with one-another, mostly autonomously, to achieve ad hoc application specific goals.

Traditionally, Quality of Service (QoS) has three primary enablers, which are bandwidth (throughput), queuing and classification. With respect to recent advances in telecommunications, specific to the Internet, a number of suggested standards for providing Quality of Service have emerged. These make use of the three enabling features mentioned above, in addition to notification mechanisms in the event of congested networks, and resource reservation across the network.

Some Internet-specific QoS mechanisms have become standardised, for example Resource Reservation Protocol (RSVP), Integrated Services architecture (IntServ) and Differentiated Services architecture (DiffServ).

DiffServ mechanisms operate at the Network Layer (or Layer 3) and are used across the Internet Protocol (IP) network, often in conjunction with Multiprotocol Label Switching (MPLS). DiffServ is implemented using Differentiated Services Code Points (DSCP), which are set in the IP header of a packet.

For General Packet Radio Service (GPRS), Universal Mobile Telecommunications System (UMTS) and Long Term Evolution (LTE) networks, another set of service classes are available to provide QoS. In order to co-exist with Internet based QoS, DSCPs may be mapped to the appropriate traffic classes defined in the ETSI specifications which govern cellular communications. Appropriate traffic classes are for example conversational classes, streaming classes, interactive classes and background classes.

In the case of Low Rate Wireless Personal Area Network (LR-WPANs), IP networking is not supported, with the exception of IPv6 over Low power Wireless Personal Area Networks (6LoWPAN). However, 6LoWPAN is designed to accommodate IPv6 over IEEE 802.15.4. This requires the compression of traditional IPv6 headers. As such, the Type of Service (ToS) field, which allows for the use of DSCPs for DiffServ implementation, is elided. Furthermore, there is no known implementation of DiffServ for 6LoWPAN, in the event of carrying the ToS field in the IPv6 header. Therefore, hop-by-hop behaviours based on this principle have not yet been defined.

Moreover, given the variety of application types for M2M deployment, it will be at the discretion of the application level logic deployed with each device to determine what treatment will be needed for certain messages that traverse the networking infrastructure.

Considering relative commonality between the network infrastructures involved, in contrast with the variety of application areas of M2M, and application specific optimisations that can be made to the underlying protocols, there is currently no solution to determine an end-to-end Quality of Service (QoS) mechanism, applicable to every scenario.

Embodiments of the present invention will improve the situation.

## SUMMARY

To address these needs, a first aspect of the present invention relates to a method of data processing for managing the end-to-end quality of service in a Machine-to-Machine network comprising a set of devices in a device domain of the Machine-to-Machine network, a gateway in a network domain of the Machine-to-Machine network, and a service platform in an application domain of the Machine-to-Machine network, each device of the set of devices being connected to the service platform via the gateway, the method comprising steps of:

at a device of the set of devices:

a) collecting measure data and generating a message to be transmitted from the device to the service platform, the message containing the collected measure data and a quality of service field, the quality of service field containing data related to a priority level of the message, the priority level of the message being determined by applying to the collected measure data at least one predetermined rule,

at the gateway:

b) receiving the said message and decoding the quality of service field data of the message,

c) mapping the quality of service field data to at least one quality of service parameter related to a protocol used in the network domain and modifying the said message according to the mapping, and

d) transmitting the modified message from the gateway to the service platform depending on the mapping.

This method enables M2M network operators to deploy a shared infrastructure whilst maintaining fairness and flexibility for a range of application types, with respect to Quality of Service management.

A second aspect of the present invention relates to a method of data processing for managing the quality of service at a gateway of a network domain of a Machine-to-Machine network, the gateway being connected to a set of devices of a device domain of the Machine-to-Machine network and to a service platform of an application domain of the Machine-to-Machine network, the method comprising steps of:

e) receiving, from a device of the set of devices, a message to be transmitted to the service platform, the message having a quality of service field containing data related to a priority level of the message,

f) decoding the quality of service field data of the message,

g) mapping the quality of service field data to at least one quality of service parameter related to a protocol used in the network domain and modifying the said message according to the mapping, and

h) transmitting the modified message to the service platform depending on the mapping.

In some embodiments wherein several messages are received at the gateway, step h) may comprise operations of sorting the received messages depending on the mapping, and scheduling the transmission of the received messages from the gateway to the service platform depending on the sorting.

In this way, if the gateway continuously receives data at a rate higher than it is capable of transmitting to the service platform, it must manage its memory resources to accommodate as many highest priority messages as possible - thereby dropping all lower priority messages - if necessary.

The priority level of each message may be selected in a predetermined set of priority levels, step h) comprising transmitting the received messages having the higher priority level on a first in first out immediate basis, and then transmitting the received messages having a lower priority level.

The method may comprise a step of determining a end price for a message transmitted, the end price being determined based on a volume of the message, a cost per unit of volume and a quality of service provided, the quality of service being determined from the quality of service field data of the said message.

Step e) may comprise an operation of timestamping a message received at the gateway, step h) comprising an operation of determining a deadline for the transmission of a message from the time of message reception at the gateway.

A third aspect of the present invention relates to a computer program product comprising one or more stored sequences of instructions that are accessible to a processor and which, when executed by the processor, cause the processor to carry out the steps of the method according the second aspect.

A fourth aspect of the present invention relates to a method of data processing for managing the quality of service at a service platform of an application domain of a Machine-to-Machine network, the service platform being connected to a gateway of a network domain of the Machine-to-Machine network, the method comprising steps of:

i) receiving, from the gateway, a message containing quality of service data inserted by the gateway,

j) using the quality of service data to determine a health status of the Machine-to-Machine network.

In this way, the status of devices may be known without sending queries/probes directly to each individual device. This would lead to increased power saving, reduced network congestion and maintain ignorance of the underlying applications, thereby reducing complexity at the service platform.

A fifth aspect of the present invention relates to a computer program product comprising one or more stored sequences of instructions that are accessible to a processor and which, when executed by the processor, cause the processor to carry out the steps of the method according to the fourth aspect.

A sixth aspect of the present invention relates to a method of data processing for managing the quality of service at a device of a device domain of a Machine-to-Machine network, the device being connected to a gateway of a network domain of the Machine-to-Machine network, the method comprising steps of:

k) collecting measure data and generating a message to be transmitted from the device, the message containing the collected measure data, and

1) inserting in the message a quality of service field containing data related to a priority level of the message, the priority level of the message being determined by applying to the collected measure data at least one predetermined rule.

The quality of service field data of a message may contain, further data related to a priority level of the message, data related to a priority level of an application providing the message. In this way, the messages related to a particular application may be prioritized. It further permits to introduce a pricing fairness through the use of the QoS field.

A seventh aspect of the present invention relates to a computer program product comprising one or more stored sequences of instructions that are accessible to a processor and which, when executed by the processor, cause the processor to carry out the steps of the method according to the sixth aspect.

A eighth aspect of the present invention relates to a gateway of a network domain of a Machine-to-Machine network, configured to connect a set of devices of a device domain of the Machine-to-Machine network to a service platform of an application domain of the Machine-to-Machine network, the gateway being further configured to:

- receive, from a device of the set of devices, a message to be transmitted to the service platform, the message having a quality of service field containing data related to a priority level of the message,

- decode the quality of service field data of the message,

- mapping the quality of service field data to at least one quality of service parameter related to a protocol used in the network domain and modifying the said message according to the mapping, and

- transmit the modified message to the service platform depending on the mapping.

A ninth aspect of the present invention relates to a service platform of an application domain of a Machine-to-Machine network, the service platform being configured to connect a gateway of a network domain of the Machine-to-Machine network, the service platform being further configured to:

- receive, from the gateway, a message containing quality of service data inserted by the gateway,
- use the quality of service data to determine a health status of the Machine-to-Machine network.

A tenth aspect of the present invention relates to a device of a device domain of a Machine-to-Machine network, the device being configured to connect a gateway of a network domain of the Machine-to-Machine network, the device being further configured to:

- collect measure data and generate a message to be transmitted from the device, the message containing the collected measure data, and

- insert in the message a quality of service field containing data related to a priority level of the message, the quality of service field containing data related to a priority level of the message, the priority level of the message being determined by applying to the collected measure data at least one predetermined rule.

An eleventh aspect of the present invention relates to a Machine-to-Machine network comprising a gateway according to the eighth aspect, a set of devices according to tenth aspect, and a service platform according to the ninth aspect, each device of the set of devices being connected to the service platform via the gateway.

## BRIEF DESCRIPTION OF THE DRAWINGS

The present invention is illustrated by way of example, and not by way of limitation, in the figures of the accompanying drawings, in which like reference numerals refer to similar elements and in which:

- Fig.1 is a schematic block diagram of a Machine-to-Machine (M2M) network according to an embodiment of the invention;

- Fig.2A and Fig.2B are schematic block diagrams of messages transmitted in the M2M network;

- Fig.3 is a schematic block diagram of a CPU card of a gateway of the M2M network according to an embodiment of the invention;

- Fig.4 is a schematic block diagram of a CPU card of a gateway of the M2M network according to another embodiment of the invention;

- Fig.5 is a chart showing steps of a method for managing the quality of service in the M2M network according to an embodiment of the invention; and

- Fig.6 is a flow chart showing steps of a method of configuration of an M2M application of the M2M network.

## DESCRIPTION OF PREFERRED EMBODIMENTS

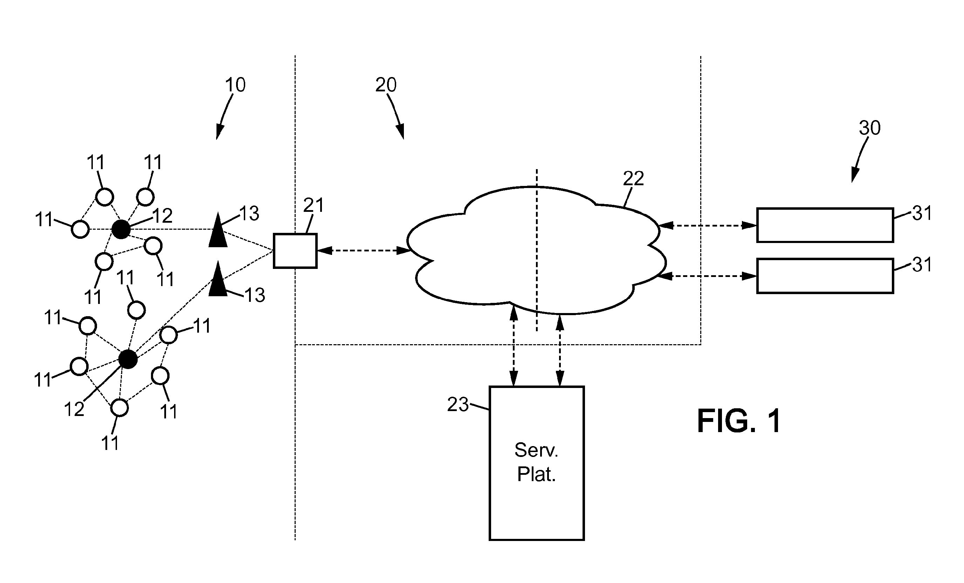

**Fig.1** shows a Machine-to-Machine (M2M) network comprising a M2M device domain 10, a M2M network domain 20, and a M2M application domain 30.

The device domain 10 is based upon Low Rate Wireless Personal Area Networks, such as described in IEEE 802.15.4. The device domain 10 comprises wireless sensor and actuator networks (WSAN), communicating in a Low Rate Wireless Personal Area Network (LR-WPAN) space. Examples of LR-WPAN are networks using IEEE 802.15.4, ZigBee, Wavenis, or Bluetooth technologies. In the embodiment represented in Fig.1, the device domain 10 comprises a set of M2M devices 11, a set of sink nodes 12 and a set of router nodes 13. The devices 11 can be for example Wavenis devices or ZigBee devices. The devices 11 are configured to collect measure data and to generate a message M containing the collected measure data. Each device 11 is connected to a sink node 12. Each sink node 12 is connected to a router node 13 which may be required to extend the range of communication between a device domain cloud and an associated gateway.

The network domain 20 generally comprises cellular networks (GSM, GPRS, UMTS, LTE) and backbone IP networks. In the example, the network domain 20 comprises a M2M gateway 21 and an IP backbone 22. The gateway 21 bridges the divide between the device domain 10 and the network domain 20. The device domain nodes 13 are connected to the gateway 21. The gateway 21 is connected to the IP backbone 22. The network domain 20 is configured to connect the devices 11 of the device domain 10 to a centralised M2M service platform 23 of the application domain 30, over traditional wired or wireless means, using the gateway 21.

The gateway 21 is a bi-directional, multi-connectivity device. In the case of a wired connection, the connectivity of the gateway 21 to the service platform 23 may use Ethernet, Digital Subscriber Line (DSL), Asymmetric Digital Subscriber Line (ADSL), etc. In the case of a wireless connection, cellular, or mobile broadband, the gateway 21 may be connected to the service platform 23 using Global System for Mobile Communications (GSM), General Packet Radio Service (GPRS), Universal Mobile Telecommunications System (UMTS), Long Term Evolution (LTE), etc. Device domain nodes 13 are connected to the gateway 21 using their native communication protocol.

The application domain 30 is configured to permit a user to have access to the service platform 23 via Web service servers 31, which are for example Simple Object Access Protocol (SOAP) or Representational State Transfer (REST) based implementations.

The Quality of Service (QoS) system described here for M2M networks allows full privacy of information to be retained by application developers/owners. The QoS system operates either within the application layer with respect to the generalised Open Systems Interconnection (OSI) communications model, or may be viewed as a presentation layer. With respect to the needs of future M2M application developers, who require the support of a mobile network operator, the QoS system is configured to allow the development of amicable service level agreements, and facilitates the provision of transparent reporting of the provided service level.

In order to achieve end to end quality of service in M2M type networks, the QoS system is configured to exploit the underlying QoS mechanisms of each network type, and each OSI-type layer of the infrastructure, in addition to deploying relevant policies. This is achieved by mapping encoded QoSF values to existing appropriate QoS enabling technologies, such as to DSCPs for Layer 3 IP QoS, as described in detail below.

The QoS system comprises the use of a specific message packet format to transmit messages M between an application provider and a M2M operator, in particular to transmit messages M between the gateway 21 and the service platform 23.

The service provider (Orange, for example) makes known to an application developer, a number of different Quality of Service parameters or rules. These parameters relate to the end-to-end handling of the message M and may be used to instruct the service provider how a message M is to be treated as it traverses an M2M network 10, 20, 30. The parameters or rules are designed to accommodate a variety of potential message types, including but not limited to: high priority alarm conditions, high priority messages, messages with latency requirements (i.e. the message must be received within a particular timeframe), low priority messages, messages that accept best effort handling, and so on.

The M2M network is agnostic of the type of network implemented at the M2M device domain 10. For example, the device domain 10 may include a ZigBee, 6LoWPAN, Bluetooth, UWB, etc. type network. The message M is therefore formatted in a particular way compatible with the service provider's M2M infrastructure, at a layer higher than the highest one implemented in the M2M device domain 10. This ensures that the message M can traverse the entire M2M network infrastructure in a manner that can exploit the underlying QoS mechanisms of each device and network it traverses.

It is the responsibility of the M2M application developer to ensure that the M2M devices 11 in the M2M device domain 10 are capable of selecting the appropriate QoS setting for measure data which need to be transmitted. This QoS setting is carried out using at least one rule of a set of predetermined rules. Advantageously, such a predetermined rule may include a predetermined threshold for a specific type of measure data. The M2M device is then configured to compare the collected measure data to a least one predetermined threshold for this type of measure data, to determine if the measure data is below or above the threshold.

A QoS field value is then selected depending of the result of the comparison(s) and encoded, in the way described below. The selection may be done dynamically by the originating M2M device 11 of the message. The device 11 may be, for example, a sensor/actuator node of the M2M device domain 10.

By way of example, consider an M2M device 11 that is deployed with a primary functionality of monitoring and reporting the energy consumption of a thermostat, which it may also actuate, for example to control the temperature in a particular space. Additionally, the M2M device 11 may have a temperature sensor. Under normal operating circumstances, the primary function is to report energy consumption. The reporting cycle would be regulated (i.e. controlled by embedded software) to report the energy consumption of the thermostat at regular intervals. Such a message M may not have a very high priority, and as such, the message M may be appended with a QoS field encoding equal to a best effort service provided by the M2M service provider. However, if the device 11 detects an unusually high temperature, having sampled the temperature sensor (which exceeds a predetermined threshold, also controlled and interpreted by embedded software) it may generate a warning message M. Such a warning message M would have a higher priority than a normal report, and therefore be assigned a QoS field encoded value equal to that of a high priority message. As such, it would be treated differently as it traverses the network. Should the temperature reading exceed a higher threshold, it may choose an emergency QoS field value for the subsequently generated alarm message M. This message M would then be treated with the highest possible priority - pre-empting other messages, for example, at the gateway 21. The device 11 could also generate different types of notifications (e-mail or SMS) which may be sent directly to the authorities from the gateway 21, for example. In this example the device is configured to collect different type of measure data. For each type of measure data, one or several rules may be used. For instance, several thresholds may be used for the temperature data.

Messages M, as they are received at the gateway 21, are managed (queued, scheduled, packetized and transmitted to the service platform 23) according to the value encoded in the QoS field described below. One advantage of this is to allow the gateway 21 to handle higher priority, lower latency messages M more efficiently - without any need for knowledge of the application to which the messages M are associated. Additionally, the embedded software at the gateway 21 maps the encoded QoS field values to those available for higher level networks without the need for knowledge of the application. This is extremely advantageous due to the enormous number of potential M2M deployment scenarios.

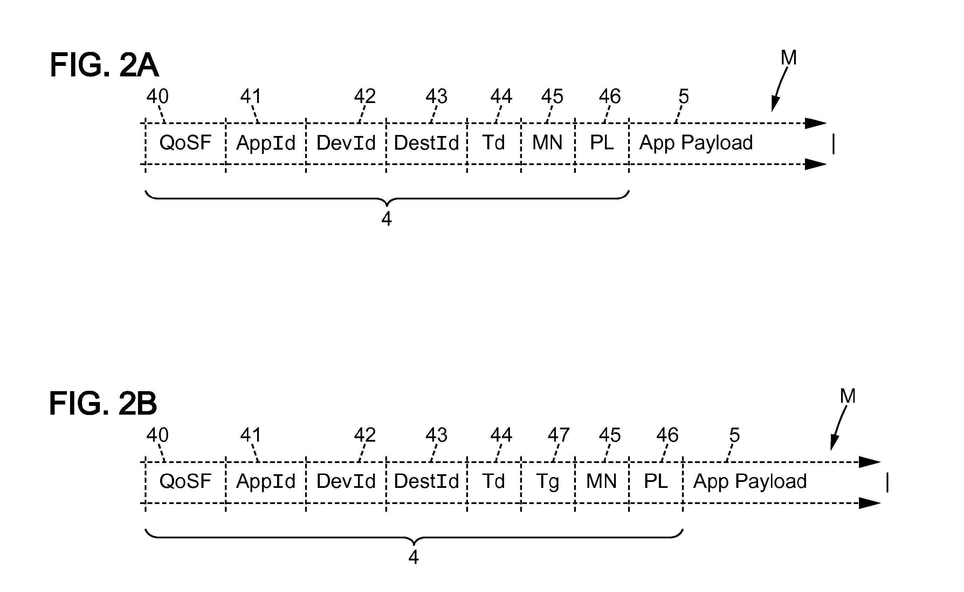

**Fig.2A** represents a message M having a message packet format according to an embodiment of the invention. According to some embodiments, the message M is related to an application that uses a 6LoWPAN-type adaptation layer, for example Wavenis.

The message M comprises an application header 4 and an application payload data field 5 which is generated by an M2M device 11 when the need for a message to be sent arises.

The application payload data field 5 comprises measure data collected by the device 11. The application payload data field 5 may be encrypted, providing that the application header 4 is available to the gateway 21 and to the service platform 23.

The application header 4 comprises a Quality of Service (QoS) field 40 configured to contain data related to the required metrics for providing Quality of Service adapted to the type of the message M, an application ID field 41 configured to contain data related to an application identifier, a device ID field 42 configured to contain data related to a device identifier, a destination ID field 43 configured to contain information related to a destination identifier, a device timestamp field 44 configured to contain data related to a device timestamp, a message number field 45 configured to contain data related to a message number, and a payload length field 46 configured to contain data related to a payload length.

The application header 4 may further comprise a gateway timestamp field 47 configured to contain data related to a gateway timestamp, as represented in **Fig.2B**. The gateway timestamp data is inserted in the gateway timestamp field 47 by the gateway 21.

In some embodiments, the final/sink node 12, 13 implements the packet structure and inserts the QoS field 40 prior to handover to the gateway processor. The device 11, 12, 13 inserting the QoS field 40 is configured to have the ability to dynamically allocate the encoded QoS value based on type/threshold of the message M.

The QoS field 40 uses a source coding mechanism to meld the requirements of the message M into one code. The QoS field 40 may be used as a lookup table. A priority level of the message M is then associated to a binary value Application developers may thus choose a value to be entered in the QoS field 40 for each type of message which may be generated by a device 11. The priority level of the message M is determined by comparing the collected measure data to at least one rule of a set of predetermined rules.

The priority levels may comprise an Emergency (E) level used for a message M containing measure data of an emergency type. The Emergency level indicates that no additional delay is allowable, that reliability must be ensured, and that the message M must not be lost or dropped once received at the gateway 21.

The priority levels may comprise a High Priority with Latency Parameter (HPLP) level used for a message M containing measure data of a high priority type. The HPLP level includes a latency parameter. There are a variety of latency parameters available, which are re-configurable. The HPLP level indicates that the message M should be relayed within the latency parameter, or dropped if the latency parameter is exceeded (reneging).

The priority levels may comprise a High Priority (HP) level also used for a message M containing measure data of a high priority type. However, the HP level does not carry a latency constraint. The HP level indicates that the message M has to be stored until it can be forwarded, but takes a lesser priority with respect to scheduling than HPLP messages.

The priority levels may comprise a Low Priority with Latency Parameter (LPLP) level used for a message M containing measure data of a low priority type. The LPLP level includes a latency parameter. The LPLP level indicates that the message M should be sent within the latency parameter, else dropped.

The priority levels may further comprise a Low Priority (LP) level and a Best Effort (BE) level. The LPLP level holds a higher priority than low priority (LP) level and best effort (BE) level.

The LP level indicates that the message M may be stored for forwarding until its priority requires it to be dropped.

The Best Effort (BE) level is used for messages M for which no QoS mechanisms apply. This level indicates that the message M has a lower priority than LP messages, and may be transmitted until its priority no longer allows it to be stored for forwarding.

The data inserted in the QoS field 40 of a message M is in particular used at the gateway 21 and the service platform 23.

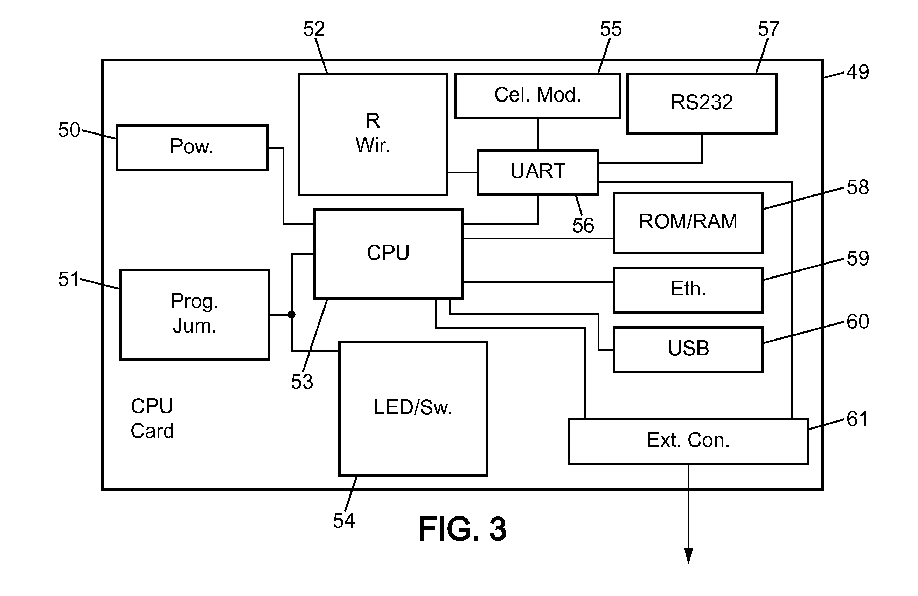

**Fig.3** represents a Central Processing Unit (CPU) card 49 of the gateway 21. In this embodiment, the gateway 21 is a dedicated gateway device.

The CPU card 49 comprises a power supply block 50 configured to manage the power supply, a programming jumper block 51 configured to permit the access to a programming mode, and a low rate wireless card block 52, which may be for example a Wavenis card or a ZigBee card, configured to permit low rate wireless communication. The CPU card 49 further comprises a Central Processing Unit (CPU) block 53 configured to manage the other blocks of the CPU card 49, a LED/Switches block 54 configured to control a set of light-emitting diode and/or switches of the gateway 21, a cellular modem block 55 configured to manage the modulation and demodulation of data, a Universal Asynchronous Receiver Transmitter (UART) block 56 configured to manage the reception and the transmission of data, a RS232 Port block 57 configured to permit a RS232 connection, a Read-Only Memory (ROM) and/or Random Access Memory (RAM) block 58 configured to store data, an Ethernet block 59 configured to manage Ethernet connection, a Universal Serial Bus (USB) block 60 configured to manage USB connection, and an extendibility connector block 61.

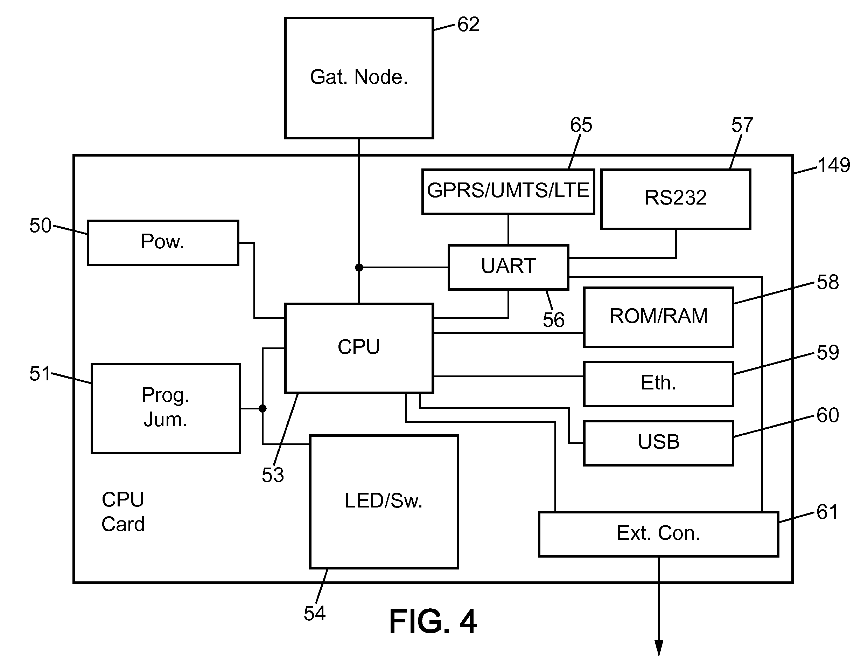

**Fig.4** represents a CPU card 149 of the gateway 21 according to another embodiment in which the gateway 21 is a generic gateway device.

The CPU card 149 comprises a gateway node 62 replacing the low rate wireless card block 52, and a General Packet Radio Service (GPRS) or Universal Mobile Telecommunications System (UMTS) or Long Term Evolution (LTE) block 65 replacing the cellular modem block 55.

The gateway 21 is configured to use data of the QoS field 40 to schedule messages M to be transmitted to the service platform 23. In particular, the gateway 21 uses data of the QoS field 40 to perform a mapping of the QoS metrics.

The mapping of the QoS metrics described by the QoS field data must be mapped to the appropriate underlying QoS mechanisms for the higher level networks. Higher level networks refer to those which allow connectivity of the gateway 21 to the service platform 23. This connectivity may be achieved via cellular (GPRS, UMTS, LTE) or wired (DSL, ADSL, Ethernet) means.

The means for providing QoS at the Internet level may be based upon the setting of appropriate Differentiated Services Code Points (DSCP) in the header of the IP packet.

Establishment of QoS enabling sessions in the case of cellular connectivity (via GPRS, UMTS or LTE) are described in the ETSI documentation, for example in ETSI TS 123 107 v9.0.0 R9. The establishment depends on the configuration and/or capability of the User Equipment (UE), or Terminal Equipment (TE), and the provisions of the Network Provider.

The gateway 21 may include a cellular module 55, or make use of a USB dongle (for mobile Internet access), also known as a modem, or 3G Key, by some network operators.

According to an embodiment of the invention, a Secure Shell (SSH) tunnel is created between the gateway 21 and service platform 23. This allows for the use of DSCPs in the IP Header, as SSH is an application layer tunnel. In the event that network coding is used to transfer multiple messages M during a transmission, the priority of the highest message transmitted in that session may be used for setting the DSCP.

The functionality of the various QoS mechanisms available for cellular connectivity is based upon a request mechanism. If a Bearer Service or a Gateway GPRS Support Node (GGSN) cannot guarantee a particular QoS request, the session will not occur, and a retransmit of the request will follow. For this reason, in the event of the deployment of critical M2M infrastructure, it is advisable to allow a class of service for critical M2M data transmission.

The gateway 21 is further configured to perform reporting and notification based upon the QoS field data. The gateway 21 is of primary importance with respect to the provision of QoS. Indeed, the gateway 21 is configured to decode the QoS field data and to apply the intended functionality depending on this data. This functionality relates to prioritised scheduling of messages M whilst respecting the latency parameters encoded in the QoS field 40.

The gateway 21 is also configured to manage the dropped packets resulting from heavy load conditions where messages M of higher priority are sent ahead of those with lower priority.

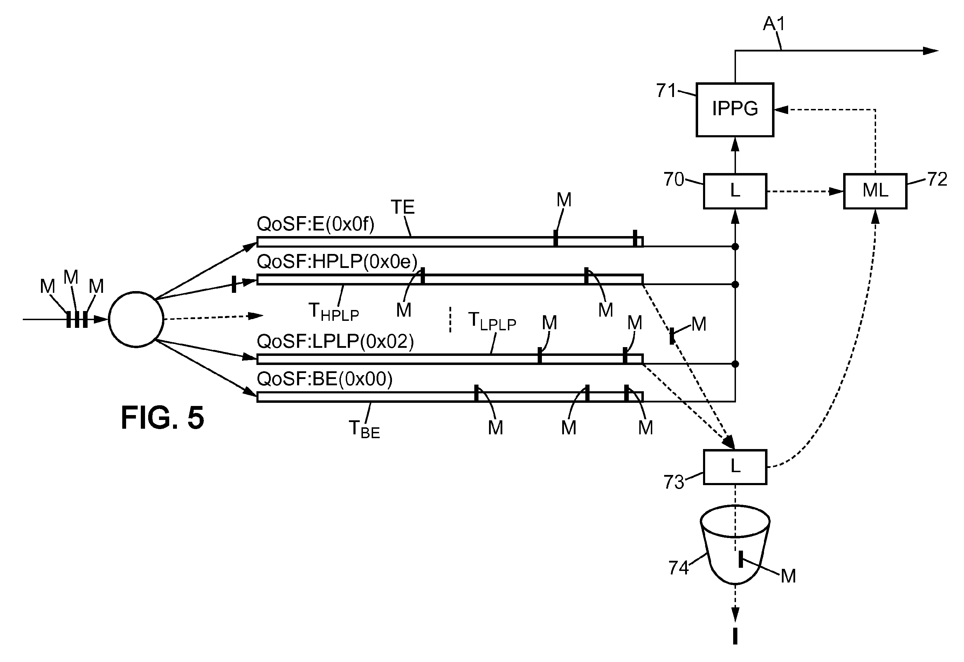

Referring to **Fig.5**, we are describing below a method for managing the QoS and scheduling messages M transmission according to an embodiment of the invention. This method may be performed by the gateway 21 to manage messages M to be sent based on the QoS field data.

In current implementations of device domain applications, congestion is not an issue. However, in the event of shared networking infrastructure, such as a gateway 21, or periods of unusually high activity, and as the number of deployments increase, it could be necessary to prioritise the transmission of messages M of certain types.

Messages M are received by the gateway 21, as symbolized by the line $T_R$, and are sorted based on their priority level, that is to say based on their QoS field data.

In the embodiment described, the gateway 21 sorts the received messages M into E priority level messages, HPLP priority level messages, HP priority level messages, LP priority level messages, LPLP priority level messages, and BE priority level messages. In Fig.5, line $T_E$ symbolizes the thread for E priority level messages, line $T_{HPLP}$ symbolizes the thread for HPLP priority level messages, line $T_{LPLP}$ symbolizes the thread for LPLP priority level messages, and line $T_{BE}$ symbolizes the thread for BE priority level messages. The threads for HP and LP priority level messages are not illustrated for reasons of clarity.

Messages M of E priority level type are treated on a first in first out (FIFO) immediate basis, i.e. are transmitted as soon as possible. The thread $T_E$ may not be pre-empted by any other, and have to be emptied before allowing access to the transmission medium for lower priority messages. Moreover, the thread $T_E$ may also have the ability to pre-empt lower priority threads, and thereby gain expedited access to the transmission medium.

When access to the transmission medium is granted, the corresponding message M is logged as sent, as symbolized by the logger block 70, and is transmitted to an IP packet generator 71. The IP packet generator 71 processes the message M and then transmits the processed message M to the service platform 23, as symbolized by arrow A1.

Once the transmission of E priority level messages M is finished, access is released to other threads.

The threads $T_{HPLP}$ and $T_{LPLP}$, which manage messages M having latency parameters, are prioritised based upon the latency requirement with respect to access to the transmission medium. When access to the transmission medium is granted to the HPLP thread (or LPLP thread), the HPLP (or LPLP) messages M are sent as described above.

Additionally, once the deadline specified by QoS field data of a message M has been exceeded, the corresponding message M is logged as dropped, as symbolized by the logger block 73, and is dropped, as symbolized by drop block 74. The logger blocks 70 and 73 transmit log data to a master log block 72.

The HP and LP threads have no latency parameter, and as such have no associated deadlines. Therefore, they are treated on a First In First Out basis with respect to access to the transmission medium. If the thread approaches an overflow condition, determinable by the memory availability and definition for the thread, the oldest message M is dropped first to accommodate newer information.

Depending upon the capabilities of the gateway 21, it may be possible to implement multiple instances of this method, each instance being associated to an application. A priority level is here allocated to each application and inserted in the QoS field 40 of each message M related to the application. For example, if there are two applications, the method described above is executed for a first application, whose priority is higher than the priority of the second application, before releasing the transmission medium to the second application.

This priority management may be reflected in the billing of M2M data by network operators. For example, for a given set of data transmitted, an end price P may be defined as a function F of a volume of data transmitted, a cost per unit of volume (priced per kilobyte, for example) and a quality of service provided. Other factors may be included, such as a priority level of an application in the case of shared infrastructure like gateway. The end price P is thus defined as:

$$P = F(V, Q, p)$$

where V is the product of the volume of data transmitted and the cost per unit of volume, Q is a correction factor for the data transmitted priority level, and p is a correction factor for the application priority level.

The total price P(t) may then be defined as the sum of a basic subscription P(sub) plus the end price P associated to each set of data transmitted.

$$P(t) = P(sub) + \sum_{n=0}^{x} (V \times Q_n \times p); \quad \forall\, n, x \in |QoSF|$$

Consider for example a scenario whereby a first QoS field value is used for each message M of a first application and a second QoS field value is used for each message M of a second application. In this example, the correction factor p for the application priority is neutral (i.e. 100%). In the first application, the Emergency value is used for all messages M. This may correspond to a correction factor Q for the QoS of 110%. In the second application, the Best Effort value is used for all messages M. This may correspond to a correction factor Q for the QoS of 90%.

Assume that each application has transmitted a volume of 50kB of data, that the price per kB is €0.08, and that there is no basic subscription P(sub) in this case. Then:

| Case 1: QoSF = Emergency | Case 2: QoSF = Best Effort |
| --- | --- |
| $P(t) = 0 + ((50 \times €0.08) \times 110\% \times 100\%)$ $P(t) = €4.40$ | $P(t) = 0 + ((50 \times €0.08) \times 90\% \times 100\%)$ $P(t) = €3.60$ |

The values presented here are for illustrative purposes, and should be agreed between M2M network operators and M2M clients. It is intended to show that pricing fairness may be introduced through the use of the QoS field 40.

The QoS management method described above is a hybrid priority ranked multithread scheduling using Earliest Deadline First (EDF) with reneging. Its implementation permits to manage high priority, low latency M2M traffic, respecting the nature of existing QoS standards and their implementation.

As mentioned before, the gateway 21 is responsible for the mapping of the QoS field 40 parameters to the appropriate QoS mechanisms available for the higher level networks. In order to maximise connectivity sessions, the mapping may be carried out using the priority of the highest ranked message M in the queue, for the transmission session. This may be dependent upon the transceiver used in the gateway 21, for example GPRS, UMTS, LTE, or wired, and support of the QoS mechanisms from the network operator. According to an embodiment, in the case of UMTS, a high priority message M is transmitted using the interactive class, whilst a lower priority message M is transmitted using background traffic class.

The gateway 21 is further configured to maintain a log of all of its activity, to be transmitted during periods of low activity, at the point of memory saturation. This log may be used to generate reliability statistics at the service platform 23.

The majority of high priority messages M that are received from the device domain 10 by the gateway 21 should be received with a high percentage of success. This may include a three-way Transmission Control Protocol (TCP) handshake to ensure completed and acknowledged delivery. A checksum may be added to ensure integrity.

The gateway 21 is also configured to timestamp the messages M. This permits to perform reporting and statistical analysis relating to the management of the latency QoS metric. The timestamp field 48 is thus inserted, by the gateway 21, in the application header 4 of each message M, to formulate the final readable message format at the service platform 23. This insertion is performed prior to the queuing of the message M.

The service platform 23 is configured to perform a number of QoS related activities. These activities may include Service Level Agreement (SLA) monitoring, QoS monitoring, availability monitoring, report generation, interaction with the M2M device domain 10, policy enforcement, accounting, billing, information, data security monitoring, etc.

We are describing below a configuration stage of the M2M network according to an embodiment of the invention. During the configuration stage, the application developer has to configure the service platform 23 to implement policies based upon the intended functionality of the M2M device deployment.

Any number of QoS field types may be used, depending on the variety of message types that can be generated by the devices 11 at the device domain 10. The QoS field types are hard coded into the application's devices as part of the payload at the device domain 10. For a QoS field type, the QoS field value to be used would be set by the application depending on the type of message that has been sensed. For example, if the device 11 senses an alarm condition, the Emergency QoS field value can be used, whereas, normal readings would be transmitted at a lower priority.

The application developer may inform the system of a normal functionality of the deployment. For example, one such metric would include the number of regular messages M that are required to be sent from each device 11 during a time period. It must also be known what levels of loss are acceptable.

For example, in the event of a metering application where each device 11 would be scheduled to transmit a message M once a day, the service platform 23 should be aware of this, but also that an acceptable rate of reception would be that of three messages per week, given the lossy nature of the channel. Any more than three losses in a week might suggest that the device 11 is malfunctioning.

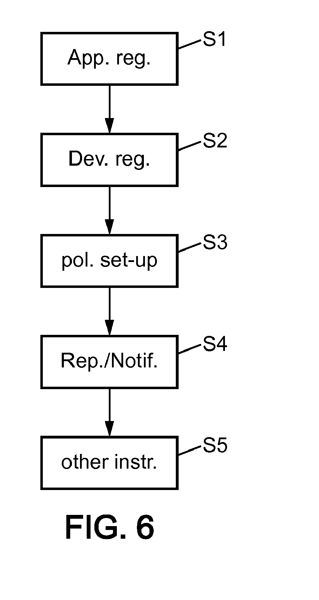

Referring to **Fig.6**, the configuration stage of an M2M application may include the following steps, which appear via Web Service to the application provider/manager.

In step S1, an application registration is performed.

In step S2, a device registration is performed.

In step S3, a policy is set-up. The policy includes the QoS and the security. The policy set-up, with respect to QoS, includes providing information regarding normal expected functionality of devices 11, acceptable message retrieval/loss rates, etc. This information takes the form of web forms implemented via web services.

The security set-up may include providing information regarding system access management, user authentication, data and information management, etc.

In step S4, reporting and notification are performed.

In step S5, other relevant instructions are set.

The policy set-up with respect to the QoS may be performed using a set of tools, which are described below.

A QoS monitoring tool QoSMon may be used to autonomously monitor the QoS metrics based upon the retrieved device data. The tool QoSMon permits to calculate a latency parameter satisfaction, a reliability parameter satisfaction, and a notification mechanism functionality.

There are two latency considerations. Due to the nature of the communications infrastructure at the M2M device domain 10, the M2M network operator cannot be held accountable for delays that occur at the M2M device domain, particularly as a third party may be responsible for the configuration and deployment of the M2M device domain 10. It can, however, maintain responsibility for latency observed between the gateway 21 and the service platform 23.

Latency is calculated using the device timestamp data included in the application header 4 of a message M. For end-to-end latency the time Td of message generation at the M2M device domain 10 is deducted from the time Ts of reception of the message M at the service platform 23. The latency L is thus determined by:

$$L = Ts - Td$$

The delay between time Tg of message reception at the gateway 21 and time Ts of message reception at the service platform 23 is similarly calculated and gives the network operator latency L(NO):

$$L(NO) = Ts - Tg$$

The deadline for transmission, as part of the scheduling algorithm, is calculated from the time of message reception at the gateway 21. For example, if the encoded QoS field data of a message M described a five minute delay tolerance, a deadline of five minutes from the time Tg is enforced.

In the case of action being required on the part of the application provider (or other actors), the service platform 23 is required to generate notifications (SMS, e-mail, etc.) to the relevant actor. This functionality may be monitored and assured.

The reliability parameter is calculated based upon the application policy defined at the configuration stage of the M2M network, and the reported activity log from the gateway 21. For a given QoS field data, that is to say for a given message type, the network operator will be required to provide a degree of reliability within which the message will traverse the network. This degree of reliability may be included in any potential Service Level Agreement (SLA) and represented as a percentage.

The degree of reliability is for example calculated based upon statistics available at the service platform 23, compared with statistics returned for the gateway 21. It should be noted that messages M emanating from the device domain 10 that are not recorded by the gateway 21 are unknown to the service platform 23, as it would be impossible to ascertain their existence using this infrastructure.

A message counter may be used to identify messages M that have been lost prior to reception at the gateway 21. This is achievable once the reports from the gateway 21 have been received at the service platform 23. In this manner, it is determinable, for all messages M lost, whether they were dropped by the gateway 21 as a result of congestion, or if they were lost at the device domain 10. Such loss at the device domain 10 is expected due to the lossy nature of the communications infrastructure.

The tool QoSMon may report to an overall SLA monitor tool. The SLA monitor tool may not be totally dependent upon the QoS provision of the networking infrastructure, and may include other client/operator agreeable parameters.

An availability monitor tool AvMon may be used to output a visual and numerical representation of the health status of the underlying network, and associated devices. The tool AvMon is generated based upon the policy for QoS and reporting agreed upon at the configuration stage of the M2M network. The tool AvMon uses context-based interpretation of the state of the network and its devices 11 based upon the policy introduced at the configuration stage, and the known information gathered from available statistics at the service platform 23. The tool AvMon uses both the QoS field encoded values received (thereby determining type of message) and the counter values. One advantage of this is to allow for the status of devices 11 to be known without sending queries/probes directly to individual M2M devices. This would lead to increased power saving, reduced network congestion and maintain ignorance of the underlying applications, thereby reducing complexity at the service platform 23.

For example, if an application is configured to generate a number x of reports per day, it may be acceptable for the network to receive a number (x-n) of reports per day, provided that the number (x-n) is greater than a predefined threshold y. Then the system may be considered to be functioning adequately, and the devices 11 are available. On the contrary, if the number (x-n) is less than the threshold y, it may be inferred that the system is not functioning to the required level, and/or that devices 11 may be unavailable. At this point, devices 11 may be queried from the service platform 23. In the event that they are unavailable, maintenance may be scheduled. In this manner, metrics such as the times between failures and time to repair may be generated.

A report generator tool may be used to generate reports pertaining to the QoS provided by the operator. This tool is used to illustrate the extent to which the provisioning of the network is meeting the various metrics agreed under the Service Level Agreement.

In cases where a system user interacts with a device 11, via the service platform 23, it may be recommended that all messages M use the highest priority settings. In terms of the predefined QoS field data, this corresponds to an emergency or HPLP setting. The reason for this is to allow for the immediate and reliable transmission of queries, code updates, etc. Given the autonomous nature of the underlying networks, it is envisaged that connectivity between a human operator and end devices should be kept to the very minimum, and occur only when absolutely necessary.

The QoS field 40 can be introduced in the charging scheme for data sent over an M2M network. Fairness can be managed in this manner, as higher priority data would be penalised more heavily in terms of cost with respect to lower priority or best effort data. As mentioned above, a correction factor can be applied. Additionally, it is possible for applications themselves to be prioritised in the event of shared infrastructure. Shared infrastructure may be described as a number of device domain deployments that connect to the service platform 23 using the same gateway 21. A further penalty could be applied to having priority assigned to the application. In this way, the scheduler at the gateway 21 would treat the data of the higher priority application first, etc.

One advantage of this QoS system is to reduce complexity at the gateway by removing the requirement for any knowledge of the application deployment.

The mechanism described is both extendible from the application layer of the device to an M2M service platform. In this way, the M2M operator can treat different types of messages appropriately (with respect to urgency or priority), and report transparently on the functional status of the network. This is important for an M2M network operator to be able create and agree Service Level Agreements with M2M clients, or application developers.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed may be combined without departing from the scope of the invention.

**Claims**

1. Method of data processing for managing the end-to-end quality of service in a Machine-to-Machine network comprising a set of devices (11, 12, 13) in a device domain (10) of the Machine-to-Machine network, a gateway (21) in a network domain (20) of the Machine-to-Machine network, and a service platform (23) in an application domain (30) of the Machine-to-Machine network, each device of the set of devices (11, 12, 13) being connected to the service platform (23) via the gateway (21), the method comprising steps of:

   at a device of the set of devices (11, 12, 13):

   a) collecting measure data and generating a message (M) to be transmitted from the device to the service platform (23), the message (M) containing the collected measure data and a quality of service field (40), the quality of service field (40) containing data related to a priority level of the message (M), the priority level of the message (M) being determined by applying to the collected measure data at least one predetermined rule,

   at the gateway (21):

   b) receiving the said message (M) and decoding the quality of service field data of the message (M),
   c) mapping the quality of service field data to at least one quality of service parameter related to a protocol used in the network domain (20) and modifying the said message (M) according to the mapping, and
   d) transmitting the modified message (M) from the gateway (21) to the service platform (23) depending on the mapping.

2. Method of data processing for managing the quality of service at a gateway (21) of a network domain (20) of a Machine-to-Machine network, the gateway (21) being connected to a set of devices (11, 12, 13) of a device domain (10) of the Machine-to-Machine network and to a service platform (23) of an application domain (30) of the Machine-to-Machine network, the method comprising steps of:

   e) receiving, from a device of the set of devices (11, 12, 13), a message (M) to be transmitted to the service platform (23), the message (M) having a quality of service field (40) containing data related to a priority level of the message (M),
   f) decoding the quality of service field data of the message (M),
   g) mapping the quality of service field data to at least one quality of service parameter related to a protocol used in the network domain (20) and modifying the said message (M) according to the mapping, and
   h) transmitting the modified message (M) to the service platform (23) depending on the mapping.

3. Method according to claim 2, wherein several messages (M) are received at the gateway (21), step h) comprising operations of sorting the received messages (M) depending on the mapping, and scheduling the transmission of the received messages (M) from the gateway (21) to the service platform (23) depending on the sorting.

4. Method according to claim 3, wherein the priority level of each message (M) is selected in a predetermined set of priority levels, step h) comprising transmitting the received messages (M) having the higher priority level on a first in first out immediate basis, and then transmitting the received messages (M) having a lower priority level.

5. Method according to claim 2, comprising a step of determining a end price (P) for a message (M) transmitted, the end price being determined based on a volume of the message (M), a cost per unit of volume and a quality of service provided, the quality of service being determined from the quality of service field data of the said message (M).

6. Method according to claim 2, wherein step e) comprises an operation of timestamping a message (M) received at the gateway, step h) comprising an operation of determining a deadline for the transmission of a message (M) from the time of message reception at the gateway (21).

7. Computer program product comprising one or more stored sequences of instructions that are accessible to a processor and which, when executed by the processor, cause the processor to carry out the steps of any of claims 2 to 6.

8. Method of data processing for managing the quality of service at a service platform (23) of an application domain (30) of a Machine-to-Machine network, the service platform (23) being connected to a gateway (21) of a network domain (20) of the Machine-to-Machine network, the method comprising steps of:

i) receiving, from the gateway (21), a message (M) containing quality of service data inserted by the gateway (21),
j) using the quality of service data to determine a health status of the Machine-to-Machine network.

9. Computer program product comprising one or more stored sequences of instructions that are accessible to a processor and which, when executed by the processor, cause the processor to carry out the steps of claim 8.

10. Method of data processing for managing the quality of service at a device (11, 12, 13) of a device domain (10) of a Machine-to-Machine network, the device (11, 12, 13) being connected to a gateway (21) of a network domain (20) of the Machine-to-Machine network, the method comprising steps of:

k) collecting measure data and generating a message (M) to be transmitted from the device, the message (M) containing the collected measure data, and
1) inserting in the message (M) a quality of service field (40) containing data related to a priority level of the message (M), the priority level of the message (M) being determined by applying to the collected measure data at least one predetermined rule.

11. Computer program product comprising one or more stored sequences of instructions that are accessible to a processor and which, when executed by the processor, cause the processor to carry out the steps of claim 10.

12. Gateway (21) of a network domain (20) of a Machine-to-Machine network, configured to connect a set of devices (11, 12, 13) of a device domain (10) of the Machine-to-Machine network to a service platform (23) of an application domain (30) of the Machine-to-Machine network, the gateway (21) being further configured to:

- receive, from a device of the set of devices (11, 12, 13), a message (M) to be transmitted to the service platform (23), the message (M) having a quality of service field (40) containing data related to a priority level of the message (M),
- decode the quality of service field data of the message (M),
- mapping the quality of service field data to at least one quality of service parameter related to a protocol used in the network domain (20) and modifying the said message (M) according to the mapping, and
- transmit the modified message (M) to the service platform (23) depending on the mapping.

13. Service platform (23) of an application domain (30) of a Machine-to-Machine network, the service platform (23) being configured to connect a gateway (21) of a network domain (20) of the Machine-to-Machine network, the service platform (23) being further configured to:

- receive, from the gateway (21), a message (M) containing quality of service data inserted by the gateway (21),
- use the quality of service data to determine a health status of the Machine-to-Machine network.

14. Device (11, 12, 13) of a device domain (10) of a Machine-to-Machine network, the device (11, 12, 13) being configured to connect a gateway (21) of a network domain (20) of the Machine-to-Machine network, the device being further configured to:

- collect measure data and generate a message (M) to be transmitted from the device, the message (M) containing the collected measure data, and
- insert in the message (M) a quality of service field (40) containing data related to a priority level of the message (M), the quality of service field (40) containing data related to a priority level of the message (M), the priority level of the message (M) being determined by applying to the collected measure data at least one predetermined rule.

15. Machine-to-Machine network comprising a gateway (21) according to claim 12, a set of devices (11, 12, 13) according to claim 14, and a service platform (23) according to claim 13, each device of the set of devices (11) being connected to the service platform (23) via the gateway (21).

FIG. 1

## FIG. 2A

| QoSF | AppId | DevId | DestId | Td | MN | PL | App Payload |
|------|-------|-------|--------|-----|-----|-----|-------------|

40 · 41 · 42 · 43 · 44 · 45 · 46 · 5 · M

4

## FIG. 2B

| QoSF | AppId | DevId | DestId | Td | Tg | MN | PL | App Payload |
|------|-------|-------|--------|-----|-----|-----|-----|-------------|

40 · 41 · 42 · 43 · 44 · 47 · 45 · 46 · 5 · M

4

EP 2 466 791 A1

FIG. 3

FIG. 4

FIG. 5

QoSF:E(0x0f)  TE  M
QoSF:HPLP(0x0e)  M
$T_{HPLP}$  M  M
$T_{LPLP}$  M  M  M
QoSF:LPLP(0x02)
QoSF:BE(0x00)
$T_{BE}$  M  M  M

71 IPPG
A1
70 L
72 ML
73 L
74 M
I

FIG. 6

## EUROPEAN SEARCH REPORT

**Application Number**

EP 10 30 6454

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mario Marchese: "QoS Over Heterogeneous Networks", John Wiley & Sons , 16 April 2007 (2007-04-16), XP002654490, DOI: http://dx.doi.org/10.1002/9780470058763 ISBN: 9780470058763 Retrieved from the Internet: URL:http://onlinelibrary.wiley.com/book/10.1002/9780470058763 [retrieved on 2011-07-29] * page 10, line 11 - page 12, line 4 * * page 73, line 1 - page 75, line 2 * * page 79, line 8 - page 85, line 19 * * figures 2.3,2.4,5.2,5.11 * ----- | 1-7, 10-12, 14,15 | INV. H04L12/24 H04L12/26 H04L12/56 H04L29/08 H04L29/06 H04L12/66 |
| A | US 2007/239862 A1 (BRONEZ THOMAS [US] ET AL) 11 October 2007 (2007-10-11) * paragraph [0029] - paragraph [0033] * * paragraph [0051] - paragraph [0053] * * paragraph [0059] * * figures 3,6 * ----- | 1,10,11, 14 | |
| A | LUIZ A DASILVA: "Pricing for QoS-enabled networks: A survey", IEEE COMMUNICATIONS SURVEYS, IEEE, NEW YORK, NY, US, vol. 11, no. 2, 1 April 2000 (2000-04-01), pages 2-8, XP011285353, ISSN: 1553-877X * page 2, column 1, line 1 - page 3, column 1, line 2 * * page 5, column 1, lines 39-65 * * page 6, column 1, lines 1-16 * * table 2 * ----- -/-- | 5 | **TECHNICAL FIELDS SEARCHED (IPC)** H04L H04W H04M |

The present search report has been drawn up for all claims

| Place of search | Date of completion of the search | Examiner |
|---|---|---|
| The Hague | 9 January 2012 | Krause, Sven |

Europäisches
Patentamt

European
Patent Office

Office européen
des brevets

## EUROPEAN SEARCH REPORT

**Application Number**

EP 10 30 6454

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/208582 A1 (PERSSON FREDRIK [SE] ET AL) 6 November 2003 (2003-11-06)<br><br>* paragraph [0001] *<br>* paragraphs [0015] - [0039] *<br>* paragraphs [0052] - [0058] *<br>* paragraphs [0071] - [0072] *<br>* figures 4-8,11,20 *<br>----- | 1-7, 10-12, 14,15 | |
| A | "Machine-to-Machine communications (M2M); Functional architecture", ETSI DRAFT; TS 102690 V 0-9-1 REV MARKS, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.9.1, 9 December 2010 (2010-12-09), pages 1-210, XP014062860, [retrieved on 2010-12-09]<br>* Chapter 4<br>Annex A *<br>----- | 1-7, 10-12, 14,15 | |
| X | US 2010/080144 A1 (GREENBERG ALBERT [US] ET AL) 1 April 2010 (2010-04-01)<br>* paragraphs [0025] - [0029] *<br>----- | 8,9,13 | **TECHNICAL FIELDS SEARCHED (IPC)** |

The present search report has been drawn up for all claims

| Place of search | Date of completion of the search | Examiner |
|---|---|---|
| The Hague | 9 January 2012 | Krause, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

Europäisches
Patentamt

European
Patent Office

Office européen
des brevets

**Application Number**

EP 10 30 6454

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 10 30 6454

The Search Division considers that the present European patent application does not comply with the requirements of unity of invention and relates to several inventions or groups of inventions, namely:

```
1. claims: 1-7, 10-12, 14, 15

      Methods, computer programmable products and apparatuses for
      mapping quality of service data to enable end-to-end QoS
      across heterogeneous networks
                       ---

2. claims: 8, 9, 13

      Method, computer programmable product and apparatus for
      determining network state
                       ---
```

**ANNEX TO THE EUROPEAN SEARCH REPORT
ON EUROPEAN PATENT APPLICATION NO.** EP 10 30 6454

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2012

| Patent document cited in search report | | Publication date | Patent family member(s) | | Publication date |
|---|---|---|---|---|---|
| US 2007239862 | A1 | 11-10-2007 | US 2007239862 A1 | | 11-10-2007 |
| | | | WO 2007130004 A2 | | 15-11-2007 |
| US 2003208582 | A1 | 06-11-2003 | AT 457105 T | | 15-02-2010 |
| | | | AU 2003224534 A1 | | 17-11-2003 |
| | | | CN 1650585 A | | 03-08-2005 |
| | | | EP 1504573 A1 | | 09-02-2005 |
| | | | JP 4309338 B2 | | 05-08-2009 |
| | | | JP 2005525023 A | | 18-08-2005 |
| | | | US 2003208582 A1 | | 06-11-2003 |
| | | | WO 03094447 A1 | | 13-11-2003 |
| US 2010080144 | A1 | 01-04-2010 | NONE | | |

EPO FORM P0459

For more details about this annex : see Official Journal of the European Patent Office, No. 12/82